# FASCICULE DE BREVET EUROPEEN

(11) **EP 2 827 015 B1**
(45) Date de publication et mention de la délivrance du brevet: **28.12.2016**
(21) Numéro de dépôt: 14002036.3
(22) Date de dépôt: 13.06.2014
(51) Int. Cl.: F16D 7/04, F16D 9/00, B64C 13/28

(54) **MÉCANISME D'ACCOUPLEMENT ENTRE UN ORGANE DE COMMANDES DE VOL MANUELLES ET UN VÉRIN DE TRIM ÉQUIPANT UN AÉRONEF**
KUPPLUNGSMECHANISMUS ZWISCHEN EINEM ORGAN FÜR DIE MANUELLE FLUGSTEUERUNG UND EINEM TRIMMZYLINDER EINES LUFTFAHRZEUGS
COUPLING MECHANISM BETWEEN A MANUAL FLIGHT-CONTROL MEMBER AND A TRIM JACK ON AN AIRCRAFT

(30) Priorité: 15.07.2013 FR 1301660
(43) Date de publication de la demande: 21.01.2015
(73) Titulaire: Airbus Helicopters, 13725 Marignane Cedex (FR)
(72) Inventeur: Lebernicheux, Brice, 35200 Rennes (FR); LE-Gall, André, 13090 AIX EN Provence (FR)
(74) Mandataire: GPI & Associés

(56) Documents cités:
- EP-A1- 1 705 115
- DE-A1-102012 009 149
- FR-A1- 2 931 131
- US-A- 4 030 578
- US-A- 5 299 666

## Description

La présente invention est du domaine des systèmes de transmission de commandes de vol pour aéronefs, giravions notamment, provoquant une manoeuvre d'un organe mobile modifiant l'attitude en vol de l'aéronef. La présente invention relève plus spécifiquement des chaînes cinématiques de transmission de commandes de vol, mettant en oeuvre un vérin de « trim » et un organe de commande générateur de commandes de vol manuelles.

Plus particulièrement, la présente invention relève des modalités d'accouplement entre un dit vérin de « trim » et un dit organe de commande.

Les aéronefs sont équipés d'organes mobiles manoeuvrables par un pilote pour modifier l'attitude en vol de l'aéronef. De tels organes mobiles sont par exemple formés de gouvernes ou de volets, tel que pour un avion ou potentiellement pour un giravion. Dans le cas spécifique d'un giravion, lesdits organes mobiles sont principalement constitués des pales d'au moins un rotor équipant le giravion, lesdites pales étant montées mobiles en pivotement autour d'un axe de pas pour faire varier leur pas cycliquement et/ou collectivement en fonction de commandes de vol opérées par un pilote.

Classiquement, lesdits organes mobiles sont manoeuvrables par l'intermédiaire de chaînes cinématiques les reliant à un organe générateur des commandes de vol. Une telle chaîne cinématique comprend traditionnellement une chaîne de transmission mécanique reliant au moins un dit organe mobile à un organe de commande générateur de commandes de vol manuelles et manoeuvrable en basculement par un pilote humain.

Dans le cadre de commandes de vol automatisées, la dite chaîne cinématique comprend en outre un pilote automatique générateur d'ordres de commandes activant la mise en oeuvre d'actionneurs placés sur la chaîne de transmission mécanique.

Pour une chaîne de transmission mécanique donnée, les actionneurs comprennent typiquement un couple de vérins communément désignés par vérin « série » et vérin de « trim ». Le vérin « série » est placé en série sur la chaîne de transmission mécanique en interposition entre ledit organe de commande et l'organe mobile. Le vérin de « trim » est placé sur la chaîne de transmission mécanique en parallèle de l'organe de commande.

Il est cependant nécessaire pour le pilote humain de connaître le positionnement de la chaîne de transmission mécanique manoeuvrée par le vérin de « trim », pour finalement connaître la position courante de l'organe mobile indépendamment de sa manoeuvre au moyen de l'organe de commande ou au moyen du vérin de « trim ». A cet effet, il est traditionnel de relier mécaniquement entre eux l'organe de commande et le vérin de « trim ».

La liaison mécanique entre le vérin de « trim » et l'organe de commande est couramment réalisée par l'intermédiaire d'un bras de levier fixé à l'organe de commande et accouplé à un arbre pivotant du vérin de « trim ». L'arbre pivotant est monté fixe en translation et est entraîné par un moteur, moteur électrique notamment. La mise en oeuvre du moteur est placée sous la dépendance d'ordres de commandes générés par le pilote automatique. Le moteur et l'arbre pivotant sont typiquement mis en prise entre eux par l'intermédiaire d'un mécanisme réducteur, de sorte qu'une mise en rotation du moteur provoque un pivotement du bras de levier et par suite un basculement de l'organe de commande manoeuvrant la chaîne de transmission mécanique et fournissant au pilote une connaissance de la position courante de l'organe mobile.

Dans ces conditions, l'organe de commande est monté basculant sur un châssis de l'aéronef en étant en prise mécanique sur la chaîne de transmission mécanique et en étant solidaire du bras de levier pouvant être entraîné en basculement par l'arbre pivotant du vérin de « trim » sous l'effet d'ordres de commande générés par le pilote automatique.

Il en ressort qu'une manoeuvre en pivotement de l'arbre pivotant par le moteur du vérin de « trim » provoque une manoeuvre en basculement de l'organe de commande et de fait une manoeuvre de l'organe mobile par l'intermédiaire de la chaîne de transmission mécanique. Inversement, une manoeuvre en basculement de l'organe de commande par le pilote humain provoque non seulement une manoeuvre de l'organe mobile par l'intermédiaire de la chaîne de transmission mécanique mais aussi un pivotement de l'arbre pivotant.

Par ailleurs, le vérin de « trim » intègre fréquemment un ou plusieurs mécanismes d'embrayage placés en interposition entre le moteur et l'arbre pivotant. Le vérin de « trim » peut encore intégrer entre le moteur et l'arbre pivotant un mécanisme à retour d'efforts mettant en oeuvre des organes élastiquement déformables. Un tel mécanisme à retour d'effort est couramment exploité pour fournir au pilote humain, par l'intermédiaire de l'organe de commande, une connaissance de la position de l'organe mobile par rapport à une zone neutre prédéterminée.

Il apparaît ainsi que le vérin de « trim » est un organe structurellement complexe. Dans ce contexte, il doit être pris en compte un potentiel dysfonctionnement du vérin de « trim » pouvant provoquer un blocage au moins partiel de l'arbre pivotant ou tout au moins une résistance à son entraînement en pivotement, et en conséquence pouvant induire une gêne ou des difficultés pour le pilote humain à manoeuvrer en basculement l'organe de commande.

Pour résoudre ce problème, il est traditionnel de placer un organe de rupture, tel qu'un organe de rupture agencé en goupille, sur la chaîne de transmission de mouvements du vérin de « trim » reliant l'arbre pivotant et le moteur.

Dans le cas où un effort résistant excédant un seuil d'effort prédéfini s'oppose à la transmission d'un mouvement entre le vérin de « trim » et l'organe de commande, l'organe de rupture est rompu volontairement par le pilote humain par basculement brutal de l'organe de commande pour le libérer de l'emprise exercée par le vérin de « trim ». Il résulte de ces dispositions qu'en cas de dysfonctionnement du vérin de « trim », le pilote humain peut néanmoins librement mouvoir la chaîne de transmission mécanique pour manoeuvrer l'organe mobile au moyen de l'organe de commande libéré de l'emprise exercée par le vérin de « trim ».

Cette solution est efficace mais est inconfortable pour le pilote humain. En effet pour éviter une rupture inopinée de l'organe de rupture, ledit seuil d'effort est défini à une valeur conséquente. En cas de difficulté pour le pilote humain à entraîner l'organe de commande en raison d'un dysfonctionnement du vérin de « trim », le pilote humain doit alors rompre l'organe de rupture en appliquant un effort en basculement conséquent sur l'organe de commande.

Il apparait souhaitable que la libération de l'emprise exercée sur l'organe de commande par le vérin de « trim » en situation de dysfonctionnement générant ledit effort résistant, soit obtenue spontanément. Il est aussi souhaitable que ledit seuil d'effort soit prédéfini le plus précis possible. Il est encore à veiller, en cas de libération de l'organe de commande de l'emprise exercée sur lui par le vérin de « trim », qu'une nouvelle emprise spontanée de l'organe de commande par le vérin de « trim » soit interdite si l'effort résistant devient inférieur au seuil d'effort prédéfini.

Dans ce contexte, il a été proposé par le document FR2931131 (EUROCOPTER FRANCE) d'intégrer à un vérin de « trim » un mécanisme à limitation de couple interposé sur la chaîne à transmission de mouvements intégrée au vérin de « trim » reliant l'arbre pivotant et le moteur. Plus particulièrement, le mécanisme à limitation de couple est interposé entre l'arbre pivotant et un arbre intermédiaire entraîné par le moteur.

Selon FR2931131, le mécanisme à limitation de couple procure au moyen d'une butée à billes un accouplement rotatif entre l'arbre pivotant et l'arbre intermédiaire. En cas de dysfonctionnement du vérin de « trim » générant entre l'arbre pivotant et l'arbre intermédiaire un effort résistant excédant un seuil d'effort prédéfini, un désaccouplement entre l'arbre pivotant et l'arbre intermédiaire est spontanément provoqué pour libérer l'organe de commande de l'emprise exercée par le vérin de « trim ». Ledit désaccouplement est provoqué de manière spontanément irréversible, en plaçant les billes dans des logements spécifiques du mécanisme à limitation de couple lors de l'opération de désaccouplement, hors desquels logements les billes ne peuvent spontanément s'échapper. Pour rétablir l'accouplement entre l'arbre pivotant et l'arbre intermédiaire, une intervention humaine est nécessaire pour réarmer le mécanisme à limitation de couple.

On pourra aussi se reporter aux documents EP 1 705 115 (EUROCOPTER FRANCE) DE 10 2012 009149 (LIEBHERR AEROSPACE Gmbh), US 5 299 666 (LANG D.J. et al.) et US 4 030 578 (CACCIOLA M.J. et al.) qui décrivent divers mécanismes à limitation de couple entre deux arbres tournants.

Il apparait cependant que la structure, l'intégration et les modalités de fonctionnement d'un tel mécanisme à limitation de couple dans le vérin de « trim » méritent d'être améliorées.

En effet, il est souhaitable que l'intégration dans le vérin de « trim » du mécanisme à limitation de couple soit réalisée en évitant au mieux de complexifier la structure du vérin de « trim ». Il est aussi souhaitable d'éviter d'accroître le poids et l'encombrement du vérin de « trim », et de limiter ses coûts d'obtention et de maintenance.

Par ailleurs, l'organisation et le fonctionnement du mécanisme à limitation de couple doivent permettre son réarmement aisé visant à rétablir l'emprise du vérin de « trim » sur l'organe de commande. Il est essentiel que ledit réarmement soit opéré exclusivement par l'homme et qu'il puisse être effectué par l'opérateur le plus aisément possible, notamment en limitant les opérations de démontage du vérin de « trim ». En outre tel que précédemment exposé, le vérin de « trim » comporte potentiellement de nombreux organes associés entre eux. Un dysfonctionnement du vérin de « trim » peut donc être provoqué par un dysfonctionnement de l'un quelconque au moins de ces organes associés et/ou résulter d'un dysfonctionnement des moyens de mise en coopération de ces organes associés entre eux.

Dans ce contexte, il est souhaitable que la libération de l'organe de commande de l'emprise exercée par le vérin de « trim » soit réalisée par l'intermédiaire de moyens placés au plus proche de la mise en prise entre l'organe de commande et le vérin de « trim ». Cependant, il n'est pas opportun de complexifier les modalités de liaison mécanique entre le vérin de « trim » et l'organe de commande par l'intermédiaire dudit bras de levier.

La présente invention s'inscrit dans le cadre d'une chaine de transmission mécanique de commandes de vol équipant un giravion pour manoeuvrer un organe mobile modifiant l'attitude en vol de l'aéronef. Une telle chaîne de transmission mécanique comprend notamment un organe de commande manoeuvrable par un pilote humain pour générer des commandes de vol manuelles et comprend notamment encore un vérin de « trim » comportant un arbre pivotant entraîné par un moteur et mécaniquement relié à l'organe de commande par l'intermédiaire d'un mécanisme d'accouplement comprenant un bras de levier accouplé à l'arbre pivotant et mécaniquement relié à l'organe de commande.

Sur la base du constat qui vient d'être fait et dont relève la démarche de la présente invention, il est proposé des modalités d'accouplement entre l'organe de commande et le vérin de « trim » procurant une libération de l'organe de commande de l'emprise exercée par le vérin de « trim » en situation de dysfonctionnement. La présente invention vise notamment à proposer un mécanisme d'accouplement entre l'organe de commande et le vérin de « trim » qui répondent au mieux à un compromis satisfaisant prenant en compte l'ensemble des contraintes précédemment énoncées.

A cet effet, la présente invention a pour objet un tel mécanisme d'accouplement mettant en oeuvre un mécanisme à limitation de couple permettant de rompre l'emprise exercée par le vérin de « trim » sur l'organe de commande à l'encontre de sa manoeuvre en basculement par un pilote humain en cas d'un dysfonctionnement du vérin de « trim » générant un effort résistant à l'encontre d'une manoeuvre de l'organe de commande supérieur à un seuil d'effort prédéfini.

La présente invention vise plus particulièrement à proposer un tel mécanisme d'accouplement recherché d'une part de structure simple, fiable et pérenne, et d'autre part permettant de :
-) procurer audit seuil d'effort une libération spontanée de l'organe de commande de l'emprise exercée sur lui par l'arbre pivotant.
-) procurer ladite libération spontanée en cas d'une résistance potentiellement faible à la transmission d'un mouvement entre l'organe de commande et le vérin de « trim ». Il est notamment recherché de permettre ladite libération à un seuil d'effort résistant pouvant être choisi de valeur faible, pour procurer ladite libération en cas d'un quelconque dysfonctionnement de l'un quelconque au moins des organes que comprend le vérin de « trim » et notamment en cas de grippage significatif mais non excessif du vérin de « trim ».
-) nécessiter une intervention humaine pour réarmer le mécanisme d'accouplement, c'est à dire remettre en prise entre eux le vérin de « trim » et l'organe de commande en cas de rupture d'une telle mise en prise sous l'effet d'un dit effort résistant.
-) rendre aisée ladite intervention humaine de réarmement du mécanisme d'accouplement en simplifiant les opérations à exécuter et notamment en évitant au mieux un démontage du vérin de « trim ».

Le mécanisme de la présente invention est un mécanisme d'accouplement entre un organe de commande générateur de commandes de vol manuelles et un arbre pivotant d'un vérin de « trim » d'une chaîne cinématique de transmission de commandes de vol d'un aéronef.

Le mécanisme d'accouplement met en oeuvre l'arbre pivotant monté fixe en translation et entraîné en pivotement autour de son axe général d'extension par un moteur. A titre illustratif, l'arbre pivotant est formé d'un arbre de sortie du vérin de « trim » potentiellement constitué au moins en partie d'un arbre moteur que comprend une chaîne à transmission de mouvement du vérin de « trim » interposée entre le moteur et l'arbre pivotant.

Le mécanisme d'accouplement met aussi en oeuvre l'organe de commande monté basculant, notamment sur un support monté à bord de l'aéronef, et mécaniquement relié à un bras de levier accouplé avec l'arbre pivotant, de sorte qu'un pivotement de l'arbre pivotant provoque un basculement du bras de levier et par suite un basculement de l'organe de commande.

Le mécanisme d'accouplement met encore en oeuvre un mécanisme à limitation de couple comportant des organes d'emboîtement coopérants entre eux par emboîtement sous l'effet d'une poussée exercée par des moyens élastiquement déformables, de sorte qu'un effort résistant à une transmission de mouvement entre l'organe de commande et l'arbre pivotant du vérin de « trim », supérieur à un seuil d'effort prédéfini, provoque une rupture spontanée de la coopération entre eux des organes d'emboîtement.

Le seuil d'effort est notamment prédéfini selon l'effort de poussée exercée par les moyens élastiquement déformables. Ladite rupture spontanée de la coopération entre eux des organes d'emboîtement provoque une libération de l'organe de commande vis-à-vis de l'emprise exercée par l'arbre pivotant du vérin de « trim » sur le bras de levier mécaniquement relié à l'organe de commande.

Selon la présente invention, un tel mécanisme d'accouplement est principalement reconnaissable en ce que l'accouplement entre l'arbre pivotant et le bras de levier est réalisé par des moyens de brochage axial suivant ledit axe. Ledit brochage axial est réalisé par l'intermédiaire de dits organes d'emboîtement qui sont respectivement ménagés sur l'un et l'autre d'un couple d'organes d'accouplement. Un premier des organes d'accouplement est lié en rotation avec le bras de levier et un deuxième organe d'accouplement est lié en rotation avec l'arbre pivotant.

Par ailleurs, les organes d'accouplement comportent chacun des couloirs axiaux de circulation à leur travers de l'autre organe d'accouplement. Ladite rupture de la mise en coopération des organes d'emboîtement entre eux provoque un déplacement axial relatif des organes d'accouplement l'un à travers l'autre par l'intermédiaire des couloirs, sous l'effet d'une poussée axiale exercée par lesdits moyens à déformation élastique contre l'un quelconque des organes d'accouplement, désigné organe d'accouplement mobile.

L'organisation du mécanisme d'accouplement est telle qu'un effort résistant excédant le seuil d'effort provoque un pivotement relatif des organes d'accouplement l'un par rapport à l'autre autour dudit axe, et par suite provoque un décalage radial des organes d'accouplement l'un par rapport à l'autre avec pour effet de séparer les organes d'emboîtement par glissement l'un contre l'autre, à l'encontre de la poussée axiale exercée par les moyens élastiquement déformables contre l'organe d'accouplement mobile.

Ledit décalage radial peut être exploité pour placer les organes d'accouplement radialement l'un par rapport à l'autre en une position radiale de rupture de la mise en coopération des organes d'emboîtement entre eux. Dans ladite position radiale de rupture, l'orientation radiale du couloir de l'un quelconque des organes d'accouplement est apte à autoriser le passage à son travers de l'autre organe d'accouplement lors de la manoeuvre de l'organe d'accouplement mobile par les moyens à déformation élastique vers une position escamotée de l'organe d'accouplement mobile.

En position escamotée, l'organe d'accouplement mobile est de préférence éjecté hors de l'autre organe d'accouplement en libérant le bras de levier de l'emprise exercée par l'arbre pivotant et par suite en libérant l'organe de commande de l'emprise exercée par le vérin de « trim » sur l'organe de commande.

Il est à considérer que l'organe d'accouplement mobile peut être avantageusement éjecté hors de l'autre organe d'accouplement du côté de cet autre organe d'accouplement axialement opposé à sa face d'extrémité comportant l'organe d'emboîtement dont il est équipé. Il en ressort qu'une rupture de l'accouplement entre l'arbre pivotant et le bras de levier place l'organe d'accouplement mobile dans une zone dégagée du mécanisme à limitation de couple facilement accessible par un opérateur pour réarmer le mécanisme d'accouplement.

Un tel réarmement est facilement effectué par l'opérateur par poussée axiale appliquée contre l'organe d'accouplement mobile à l'encontre de la poussée axiale exercée contre lui par les moyens élastiquement déformables, puis par pivotement de l'un quelconque au moins de l'arbre pivotant et/ou du bras de levier, avantageusement via l'organe de commande, pour placer les organes d'emboîtement en position de brochage.

Il est d'évidence compris que les notions « axial » et « radial » sont des notions relatives identifiées par ledit axe d'extension de l'arbre pivotant autour duquel l'arbre pivotant est tournant sur lui-même et autour duquel le bras de levier est basculant.

Le mécanisme d'accouplement est de structure simple et l'accouplement entre l'arbre pivotant et le bras de levier par brochage axial est robuste, nonobstant la faculté offerte de rompre ledit accouplement en cas d'une résistance à l'entraînement de l'arbre pivotant par l'organe de commande en cas de dysfonctionnement du vérin de « trim ». La robustesse du brochage axial peut être aisément confortée en agençant les organes d'emboîtement en organes solidairement intégrés aux organes d'accouplement et en les conformant selon une section agencée en dièdre et suivant une extension radiale pouvant être importante, ce qui favorise la mise en coopération des organes d'accouplement entre eux et le dit glissement procurant la rupture de l'accouplement entre l'arbre pivotant et le bras de levier.

Le mécanisme à limitation de couple est agencé en moyens de brochage axial entre le bras de levier et l'arbre pivotant, en étant placé au plus proche du bras de levier qui constitue un organe de sortie du vérin de « trim » dédié à la liaison mécanique entre le vérin de « trim » et l'organe de commande. De telles dispositions sont favorables à l'obtention d'une rupture de la mise en prise entre l'organe de commande et le vérin de « trim » en cas de dysfonctionnement d'un quelconque organe que comprend la chaîne à transmission de mouvement reliant le moteur et l'arbre pivotant.

Il est aussi à considérer que le nombre d'organes formant le mécanisme à limitation de couple est réduit, en étant potentiellement limité aux moyens élastiquement déformables disposés axialement autour de l'arbre pivotant et aux organes d'accouplement intégrant les organes d'emboîtement coopérant entre eux par brochage axial.

De telles dispositions permettent de réduire au mieux l'encombrement et la masse de la chaîne à transmission de mouvement reliant le moteur et l'arbre pivotant, ainsi que les éventuels risques de dysfonctionnement du mécanisme à limitation de couple.

De plus, le mécanisme à limitation de couple est d'un encombrement limité, autorisant son installation en interposition radiale entre le bras de levier et l'arbre pivotant, dans une zone d'extension axiale correspondante à la zone d'extension axiale du bras de levier.

En outre, l'agencement du mécanisme à limitation de couple en moyens de brochage axial entre l'arbre pivotant et le bras de levier permet de prendre en compte un seuil d'effort prédéfini précis.

Par ailleurs, un réarmement du mécanisme d'accouplement nécessite une intervention humaine. En effet le brochage axial ayant été rompu, l'organe d'accouplement mobile est spontanément maintenu en position escamotée par les moyens élastiquement déformables exerçant une poussée axiale contre l'organe d'accouplement mobile.

Plus particulièrement, ladite rupture de la coopération entre eux des organes d'emboîtement étant provoquée par une mise en décalage radial des organes d'accouplement l'un par rapport à l'autre sous l'effet d'un dit effort résistant supérieur au seuil de couple. Ledit décalage radial autorise avantageusement le déplacement axial de l'organe d'accouplement mobile à travers l'autre organe d'accouplement, désigné organe d'accouplement fixe, vers une position escamotée dans laquelle l'organe d'accouplement mobile est avantageusement éjecté par les moyens élastiquement déformables hors de l'organe d'accouplement fixe.

Selon une forme avantageuse de réalisation, un capot amovible ménage une chambre de réception de l'organe d'accouplement mobile en position escamotée. Un retrait du capot autorise un accès par un opérateur à l'organe d'accouplement mobile en position escamotée permettant un réarmement aisé du dispositif de liaison par un opérateur. Un tel capot amovible peut être aisément fixé au bras de levier.

Les organes d'emboîtement et au moins en partie les couloirs sont préférentiellement ménagés sur des épaulements respectifs axialement ajourés équipant respectivement l'un et l'autre des organes d'accouplement. De tels épaulements sont notamment ménagés aux faces d'extrémité axiale en regard l'une sur l'autre des organes d'accouplement en position de brochage.

Selon une forme de réalisation, les épaulements dont sont munis les organes d'accouplement sont chacun formés d'un jeu d'ailettes radiales. De telles ailettes sont aptes à ménager entre elles des passages axiaux des ailettes de l'autre organe d'accouplement en formant au moins en partie lesdits couloirs.

Le premier organe d'accouplement est par exemple agencé en bague munie d'un premier épaulement comportant un premier jeu d'organes d'emboîtement et un premier dit couloir. Le deuxième organe d'accouplement mobile est par exemple agencé en douille enfilée autour de l'arbre pivotant et munie d'un deuxième épaulement comportant un deuxième jeu d'organes d'emboîtement et un deuxième dit couloir.

Les organes d'emboîtement sont agencés respectivement en coin et en goulotte de formes complémentaires à sections conformées en dièdre, aptes à ménager des rampes de glissement des organes d'emboîtement l'un contre l'autre sous l'effet dudit effort résistant à l'encontre de la poussée axiale exercée par les moyens à déformation élastique contre l'organe d'accouplement mobile.

Selon une forme préférée de réalisation, les moyens élastiquement déformables comprennent un jeu de rondelles conformées en assiette axialement empilées tête bêche et un ressort hélicoïdal. Les rondelles conformées en assiette sont robustes et sont aptes à développer un effort conséquent de poussée axiale contre l'organe d'accouplement mobile pour maintenir les organes d'emboîtement en coopération.

Le ressort hélicoïdal procure un développement des moyens élastiquement déformables apte à repousser l'organe d'accouplement mobile vers la position escamotée, en fournissant une poussée suffisante pour déplacer en position escamotée l'organe d'accouplement mobile circulant sans obstacle à travers l'autre organe d'accouplement.

Le bras de levier comporte avantageusement un fût ménageant une cage logeant au moins un tronçon de l'arbre pivotant en prise avec le deuxième organe d'accouplement, logeant les moyens à déformation élastique et logeant les organes d'accouplement au moins en position de brochage.

L'organe d'accouplement mobile est de préférence guidé en mobilité axiale par des moyens de guidage en translation équipant l'un des organes parmi l'un quelconque du bras de levier et de l'arbre pivotant avec lequel l'organe d'accouplement mobile est lié en rotation.

Il est évidemment compris que dans le cas où l'organe d'accouplement mobile est l'organe d'accouplement lié en rotation avec le bras de levier, l'organe d'accouplement mobile est guidé en mobilité axiale par le bras de levier. Inversement dans le cas où l'organe d'accouplement mobile est l'organe d'accouplement lié en rotation avec l'arbre pivotant, l'organe d'accouplement mobile est guidé en mobilité axiale par l'arbre pivotant.

Les moyens de guidage en translation sont notamment du type par clavetage, ou de préférence de manière analogue par cannelures. De tels moyens de guidage procurent en outre la liaison en rotation de l'organe d'accouplement mobile avec ledit organe parmi l'un quelconque du bras de levier et de l'arbre pivotant avec lequel l'organe d'accouplement mobile est lié en rotation.

L'organe d'accouplement fixe est de préférence relié solidairement par des moyens de fixation à l'un des organes parmi l'un quelconque du bras de levier et de l'arbre pivotant avec lequel l'organe d'accouplement fixe est lié en rotation. De tels moyens de fixation mettent par exemple en oeuvre des moyens de scellement ou des organes de fixation coopérants tel que par emboîtement ou par vissage.

Selon une forme de réalisation, l'organe d'accouplement mobile est formé par le premier organe d'accouplement et l'organe d'accouplement fixe est formé par le deuxième organe d'accouplement.

Selon une autre forme de réalisation, l'organe d'accouplement mobile est de préférence formé par le deuxième organe d'accouplement et l'organe d'accouplement fixe est formé par le premier organe d'accouplement.

On relèvera que le passage de l'organe d'accouplement mobile en position escamotée peut être aisément identifié par des moyens de détection de l'organe d'accouplement mobile en position escamotée. De tels moyens de détection sont aptes à fournir une information de rupture de la mise en prise entre le vérin de « trim » et l'organe de commande. Une telle information de rupture peut être avantageusement exploitée par des moyens générateurs d'un signal d'alerte.

La présente invention a aussi pour objet un vérin de « trim » pour aéronef agencé pour équiper une chaîne de transmission mécanique de commandes de vol provoquant une manoeuvre d'un organe mobile modifiant l'attitude en vol de l'aéronef. Le vérin de « trim » de la présente invention comprend notamment un arbre pivotant entraîné en pivotement par un moteur et accouplé à un bras de levier muni de moyens de liaison mécanique dédiés à la mise en prise mécanique entre le vérin de « trim » et un organe de commande générant des commandes de vol manuelles que comprend ladite chaîne de transmission mécanique de commandes de vol.

Le vérin de « trim » de la présente invention est principalement reconnaissable en ce qu'il intègre des moyens de brochage axial entre le bras de levier et l'arbre pivotant conformes aux moyens de brochage axial que comprend un mécanisme d'accouplement tel qu'il vient d'être décrit.

Des exemples préférés de réalisation de la présente invention vont être décrits en relation avec les figures des planches annexées, dans lesquelles :
- la fig.1 est une représentation schématique d'une chaîne cinématique de manoeuvre d'un organe mobile d'un aéronef permettant de modifier l'attitude en vol de l'aéronef.
- les fig.2 et fig.3 sont des illustrations schématiques en coupe axiale d'un mécanisme d'accouplement de la présente invention selon un premier exemple réalisation, respectivement en position de brochage et en position de rupture d'un tel brochage.
- les fig.4 et fig.5 sont des illustrations schématiques en coupe axiale d'un mécanisme d'accouplement de la présente invention selon un deuxième exemple réalisation, respectivement en position de brochage et en position de rupture d'un tel brochage.
- les fig.6 et fig.7 sont des illustrations en coupe axiale d'un mécanisme d'accouplement de la présente invention selon l'exemple de réalisation schématisé sur les fig.3 et fig.4, respectivement en position de brochage et en position de rupture d'un tel brochage.
- la fig.8 comprend deux illustrations en perspective (a) et (b) d'organes d'accouplement respectifs que comprend un mécanisme d'accouplement représenté sur les fig.4 à fig.7.

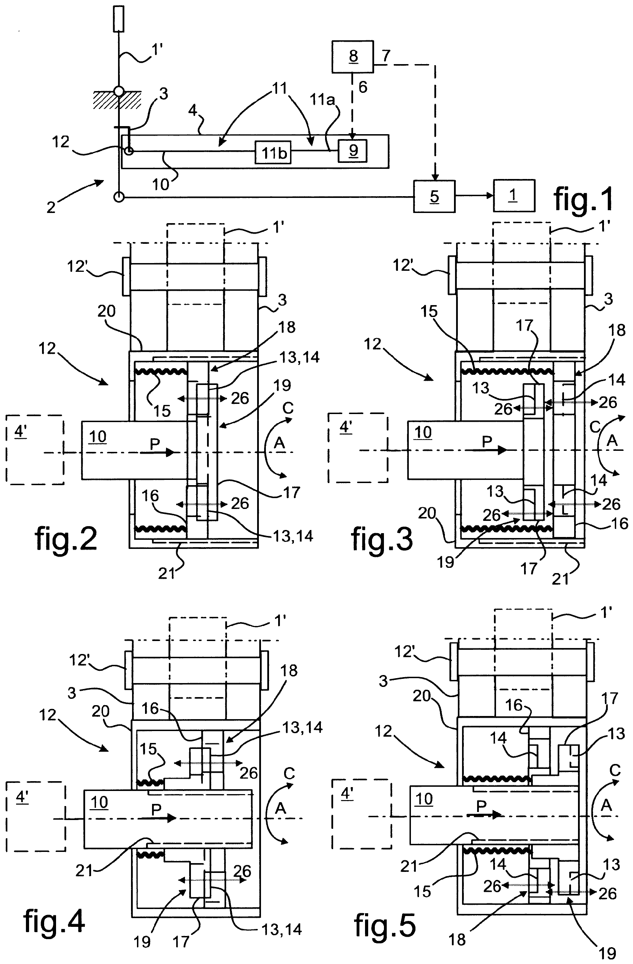

Sur la fig.1, une chaine cinématique est dédiée à la manoeuvre d'un organe mobile 1 d'un aéronef permettant de modifier son attitude en vol. La chaîne cinématique comprend une chaîne de transmission mécanique 2 interposée entre l'organe mobile 1 et un organe de commande 1' manoeuvrable par un pilote humain de l'aéronef pour générer des commandes de vol manuelles.

Par ailleurs, la chaîne cinématique comprend des actionneurs 4,5 placés sur la chaîne de transmission mécanique 2 pour provoquer sa manoeuvre selon des ordres de commandes 6,7 émis par un pilote automatique 8. De tels actionneurs 4,5 comprennent un vérin de « trim » 4 placé sur la chaîne de transmission mécanique 2 en parallèle de l'organe de commande 1' et un vérin « série » 5 placé sur la chaîne de transmission mécanique 2 en interposition entre l'organe de commande 1' et l'organe mobile 1.

Le vérin de « trim » 4 comprend un moteur 9 d'entraînement en rotation d'un arbre pivotant 10 par l'intermédiaire d'une chaîne à transmission de mouvements 11. Une telle chaîne à transmission de mouvements 11 comprend couramment, depuis un arbre moteur 11a en prise sur un rotor du moteur 9, divers organes de transmission 11 b mécanique intégrés au vérin de « trim » 4, tels que qu'un réducteur, des mécanismes d'embrayage et/ou un mécanisme de retour d'efforts par exemple.

L'arbre pivotant 10 est fixe en translation et est lié en rotation avec l'organe de commande 1' par l'intermédiaire d'un bras de levier 3, pour provoquer un déplacement de la chaîne de transmission mécanique 2 selon les ordres de commandes 6 générés par le pilote automatique 8 et inversement pour transmettre un retour d'efforts à l'organe de commande 1' lorsqu'il est manoeuvré par le pilote humain. L'organe de commande 1' est entraîné en basculement par l'arbre pivotant 10 via le bras de levier 3 lorsque le vérin de « trim » 4 est exploité pour manoeuvrer l'organe mobile 1. De telles dispositions permettent de porter à la connaissance du pilote humain l'état de la chaîne de transmission mécanique 2 quel que soit le mode de commande utilisé pour sa manoeuvre, entre un mode de commande manuel exploitant un entraînement de l'organe de commande 1' par le pilote humain et un mode de commande automatisé exploitant le vérin de « trim » 4 dont la mise en oeuvre est commandée par le pilote automatique 8.

Dans ce contexte, un basculement de l'organe de commande 1' par le pilote humain pour manoeuvrer la chaîne de transmission mécanique 2 provoque un pivotement de l'arbre pivotant 10. Il se pose donc le problème d'un dysfonctionnement du vérin de « trim » 4 pouvant induire une difficulté pour le pilote humain à manoeuvrer l'organe de commande 1' et le gêner pour modifier l'attitude en vol de l'aéronef par basculement de l'organe de commande 1'.

Pour éviter une telle situation, il est connu d'exploiter un mécanisme à limitation de couple 12 permettant de rompre l'emprise exercée par le vérin de « trim » sur l'organe de commande 1' à un seuil d'effort résistant prédéterminé opposé par le vérin de « trim » à l'encontre d'une manoeuvre de l'organe de commande 1' par le pilote humain. Il est compris qu'une telle emprise est communément considérée comme étant mécaniquement exercée par le vérin de « trim » 4 via le moteur 9 ou via tout autre organe que comprend la chaîne à transmission de mouvements 11 s'étendant depuis le moteur 9 jusqu'à l'organe de commande 1'.

Un tel mécanisme à limitation de couple 12 est de préférence intégré au vérin de « trim » 4 sur la chaîne à transmission de mouvements 11, pour éviter d'encombrer et/ou de complexifier la liaison mécanique entre le bras de levier 3 et l'organe de commande 1'. Il est cependant à considérer une forme analogue de réalisation selon laquelle le mécanisme à limitation de couple 12 serait interposé entre un doigt de pivot intégré au bras de levier 3 solidaire de l'arbre pivotant 10 et un fût solidaire de l'organe de commande 1'.

Idéalement, il est utile de placer le mécanisme à limitation de couple 12 au plus proche du bras de levier 3 pour permettre une prise en compte d'un dysfonctionnement éventuel d'un quelconque organe que comprend la chaine à transmission de mouvement 11 du vérin de « trim » 4. Il est aussi utile d'intégrer un tel mécanisme à limitation de couple 12 en limitant l'encombrement et la complexité structurelle du vérin de « trim » 4.

A cet effet, il est proposé d'interposer le mécanisme à limitation de couple 12 sur la chaîne à transmission de mouvements 11 du vérin de « trim » 4 entre le bras de levier 3 et l'arbre pivotant 10 et d'agencer le mécanisme à limitation de couple 12 en moyens de brochage axial entre l'arbre pivotant 10 et le bras de levier 3.

Une telle solution permet aussi de prendre en compte un dit seuil d'effort résistant précis et de procurer un accouplement robuste entre l'organe de commande 1' et le vérin de « trim » 4 tout en exploitant un dit mécanisme à limitation de couple 12.

En outre, le mécanisme à limitation de couple 12 est placé sur la chaîne à transmission de mouvement 11 dans un environnement dégagé procurant un accès aisé au mécanisme à limitation de couple 12 par un opérateur afin de faciliter son réarmement et notamment en évitant d'avoir à démonter le vérin de « trim » 4.

Sur les fig.2 à fig.7, ledit mécanisme à limitation de couple 12 est interposé entre l'arbre pivotant 10 et le bras de levier 3 en étant agencé en moyens de brochage axial entre eux. Le bras de levier 3 est muni de moyens de liaison mécanique 12' avec l'organe de commande 1' pour leur solidarisation l'un à l'autre.

Le bras de levier 3 est par ailleurs articulé en basculement autour de l'axe A d'extension générale de l'arbre pivotant 10, auquel arbre pivotant 10 le bras de levier 3 est accouplé par brochage axial par l'intermédiaire d'organes d'emboîtement 13,14 coopérants équipant respectivement l'arbre pivotant 10 et le bras de levier 3.

La mise en coopération des organes d'emboîtement 13,14 entre eux est réalisée sous l'effet d'une poussée P axiale produite par des moyens élastiquement déformables 15 disposés axialement autour de l'arbre pivotant 10. Dans le cas où l'effort résistant C à la transmission de mouvement entre le bras de levier 3 et l'arbre pivotant 10 est supérieur à un seuil d'effort prédéfini toléré, une rupture de la mise en coopération des organes d'emboîtement 13,14 entre eux est provoquée à l'encontre de la poussée P exercée par les moyens élastiquement déformables 15.

Les organes d'emboîtement 13,14 sont plus particulièrement ménagés sur des épaulements 16,17 que comportent des organes d'accouplement 18,19 liés en rotation respectivement avec le bras de levier 3 et avec l'arbre pivotant 10. Le bras de levier 3 comporte un fût 20 ménageant une cage logeant le mécanisme à limitation de couple 12. Plus particulièrement, le fût 20 loge un tronçon terminal de l'arbre pivotant 10, les moyens élastiquement déformables 15 et les organes d'accouplement 18,19 au moins en position de brochage.

Les moyens élastiquement déformables 15 prennent axialement appui contre l'un quelconque des organes d'accouplement 18,19, désigné organe d'accouplement mobile.

L'organe d'accouplement 18,19 mobile est monté axialement mobile en translation suivant l'axe A d'extension de l'arbre pivotant 10. La mobilité axiale de l'organe d'accouplement 18,19 mobile est exploitée pour procurer le brochage ou inversement la rupture de brochage entre les organes d'accouplement 18,19.

Par ailleurs en cas d'une rupture de brochage, la mobilité axiale de l'organe d'accouplement 18,19 mobile est exploitée pour provoquer son déplacement axial en une position escamotée sous l'effet de la poussée P avantageusement exercée axialement contre l'organe d'accouplement 18,19 mobile par les moyens élastiquement déformables 15.

Par exemple sur les fig.2 et fig.3, les moyens élastiquement déformables 15 prennent axialement appui contre un premier organe d'accouplement 18 lié en rotation avec le bras de levier 3. Dans ce cas, ce premier organe d'accouplement 18 forme ledit organe d'accouplement mobile et est guidé en translation axiale par le bras de levier 3.

Par exemple encore sur les fig.4 à fig.7, les moyens élastiquement déformables 15 prennent axialement appui contre un deuxième organe d'accouplement 19 lié en rotation avec l'arbre pivotant 10. Dans ce cas, ce deuxième organe d'accouplement 19 forme ledit organe d'accouplement mobile et est guidé en translation axiale par l'arbre pivotant 10.

Selon une forme simple de réalisation, des moyens de guidage 21 guident en translation axiale l'organe d'accouplement 18,19 mobile. De tels moyens de guidage 21 axial sont avantageusement des moyens du type par clavetage ou à cannelures par exemple, procurant en outre la liaison en rotation de l'organe d'accouplement 18,19 mobile avec l'organe correspondant, bras de levier 3 sur l'exemple de réalisation illustré sur les fig.2 et fig.3 ou arbre pivotant 10 sur les exemples de réalisation illustrés sur les fig.4 à fig.7.

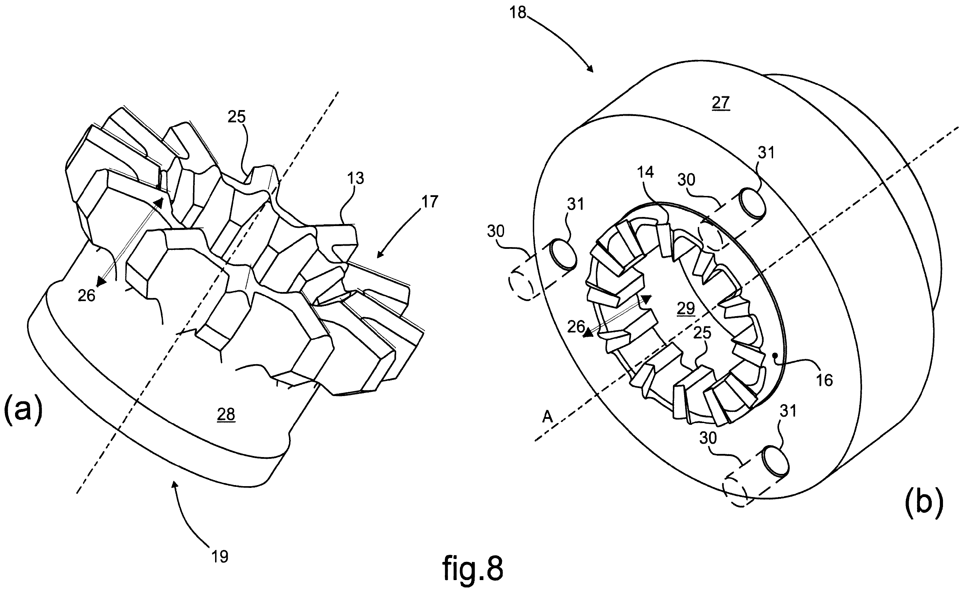

Par ailleurs sur les fig.2 et fig.3, l'arbre pivotant 10 est lié en rotation avec le deuxième organe d'accouplement 19 par de quelconques moyens de fixation courants procurant une solidarisation entre eux, tels que par intégration de moulage ou d'usinage, ou encore par l'intermédiaire d'organes de fixation coopérants. De même sur les fig.4 à fig.7, le bras de levier 3 est lié en rotation avec le premier organe d'accouplement 18 par de quelconques moyens de fixation courants procurant une solidarisation entre eux, notamment par l'intermédiaire d'organes de fixation coopérants tels qu'illustrés sur la fig.8 par exemples.

Sur les fig.2 à fig.7, les organes d'accouplement 18,19 comportent chacun des couloirs 26 axiaux de circulation à leur travers de l'autre organe d'accouplement 18,19. De tels couloirs 26 axiaux sont plus spécifiquement visibles sur les schémas en perspective de la fig.8 illustrant un exemple simple de réalisation des couloirs axiaux 26.

Ces dispositions autorisent, en cas de rupture de la mise en coopération des organes d'emboîtement 13,14 entre eux, une circulation des organes d'accouplement 18,19 l'un à travers l'autre procurant une éjection de l'organe d'accouplement 18,19 mobile hors de l'autre organe d'accouplement 18,19 monté fixe, dénommé organe d'accouplement fixe. Une telle éjection est réalisée de sorte que l'organe d'accouplement 18,19 mobile est placé en une position escamotée dans une zone dégagée du mécanisme à limitation de couple 12 facilement accessible par un opérateur.

Plus particulièrement sur les fig.2, fig.4 et fig.6, les organes d'accouplement 18,19 sont en position de brochage. En position de brochage, le bras de levier 3 et l'arbre pivotant 10 sont liés l'un à l'autre en rotation au moyen des organes d'accouplement 18,19 placés en appui axial l'un contre l'autre par l'intermédiaire des épaulements 16,17 dont ils sont respectivement munis.

En position de brochage, les organes d'emboîtement 13,14 sont maintenus en coopération par les moyens élastiquement déformables 15 appliquant une poussée contre l'organe d'accouplement 18,19 mobile.

Sur les fig.3, fig.5 et fig.7, les organes d'accouplement 18,19 sont en position de rupture de brochage. L'organe d'accouplement 18,19 mobile est évacué vers une zone dégagée du mécanisme à limitation de couple 12, localisée à l'extrémité libre de l'arbre pivotant 10 opposée à son extrémité en prise sur un quelconque organe de transmission que comprend la chaîne à transmission de mouvement du vérin de « trim » 4, tel qu'un arbre intermédiaire 4'.

Plus particulièrement en position de brochage, un effort résistant C supérieur au seuil d'effort prédéfini provoque un pivotement relatif entre les organes d'accouplement 18,19 autour de l'axe A d'extension de l'arbre pivotant 10. Ledit pivotement relatif provoque une rupture de la coopération entre eux des organes d'emboîtement 13,14 à l'encontre de la poussée P exercée par les moyens élastiquement déformables 15 contre l'organe d'accouplement 18,19 mobile. Par ailleurs, ledit pivotement relatif autorise le passage de l'organe d'accouplement 18,19 mobile à travers l'organe d'accouplement 18,19 fixe par l'intermédiaire des couloirs 26. Les moyens élastiquement déformables 15 exercent une poussée P contre l'organe d'accouplement 18,19 mobile provoquant son déplacement axial et son passage à travers l'organe d'accouplement 18,19 fixe vers la position escamotée.

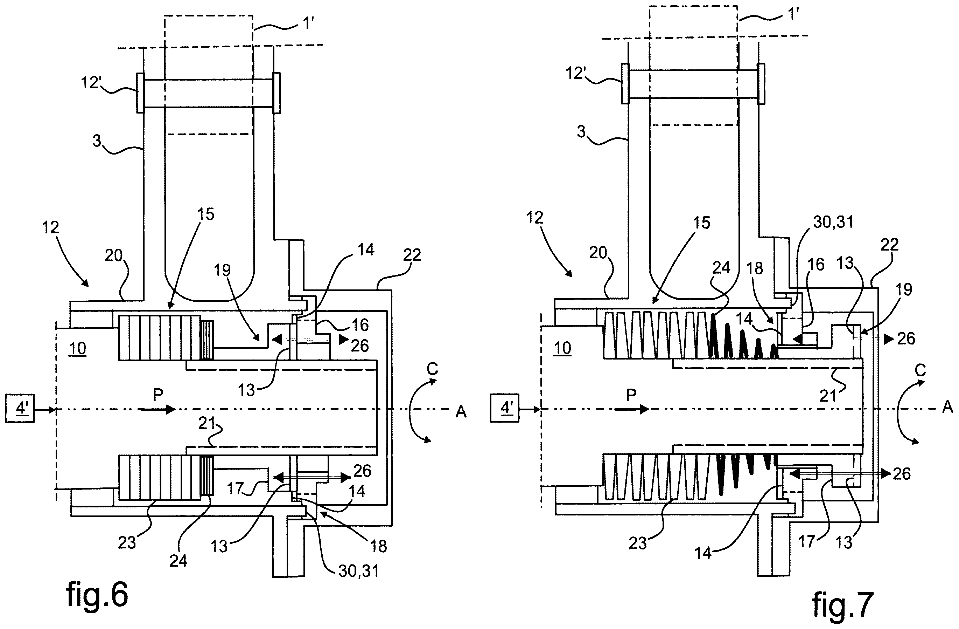

Sur les fig.6 et fig.7, le dispositif de liaison comporte un capot 22 de protection amovible ménageant une chambre de réception de l'organe d'accouplement mobile 19 en position escamotée. Un retrait du capot 22 par un opérateur procure un accès aisé à l'organe d'accouplement mobile 19 pour permettre à l'opérateur de réarmer le dispositif de liaison.

A cette fin de réarmement, l'opérateur applique une poussée axiale contre l'organe d'accouplement mobile 19 à l'encontre de la poussée P antagoniste exercée par les moyens élastiquement déformables 15, pour le déplacer en translation à travers l'organe d'accouplement fixe 18.

L'opérateur applique ensuite un mouvement de pivotement sur l'arbre pivotant 10 et/ou de basculement sur le bras de levier 3 via l'organe de commande 1', pour placer les organes d'accouplement 18,19 en position de brochage par mise en coopération des organes d'emboîtement 13,14 entre eux.

Sur l'exemple de réalisation illustré, les moyens élastiquement déformables 15 sont formés d'un empilement de rondelles 23 conformées en assiette placées tête bêche et d'un ressort hélicoïdal 24 placé en interposition entre l'empilement de rondelles 23 et l'organe d'accouplement mobile 19.

Sur la fig.8, un premier organe d'accouplement 18 lié en rotation avec le bras de levier est illustré sur le schéma (b) et un deuxième organe d'accouplement 19 lié en rotation avec l'arbre pivotant est illustré sur le schéma (a).

Les organes d'accouplement 18,19 comportent chacun un épaulement 16,17 axial formé d'ailettes 25 réparties radialement sur les organes d'accouplement 18,19. Les ailettes 25 d'un organe d'accouplement 18,19 ménagent entre elles des passages pour la circulation à son travers des ailettes 25 de l'autre organe d'accouplement 18,19. De tels passages forment au moins en partie les couloirs 26 de traversée d'un organe d'accouplement 18,19 par l'autre organe d'accouplement 18,19.

Les ailettes 25 d'un organe d'accouplement 18,19 intègrent des organes d'emboîtement 13 conformés en coin coopérant respectivement avec des organes d'emboîtement 14 intégrés à l'autre organe d'accouplement 18,19 et agencés en goulotte. Sur les exemples de réalisation illustrés, les goulottes 14 sont intégrées aux ailettes 25 du premier organe d'accouplement 18 et les coins 13 sont ménagés sur les ailettes 25 du deuxième organe d'accouplement 19.

Les coins 13 et les goulottes 14 peuvent de manière analogue être indifféremment ménagés sur l'un ou l'autre du premier organe d'accouplement 18 ou du deuxième organe d'accouplement 19, voire encore être ménagés en combinaison, telle qu'en alternance, sur l'un et l'autre des organes d'accouplement 18,19.

Un tel agencement des organes d'emboîtement 13,14 leur confère une section conformée en dièdre dont les faces ménagent des rampes d'appuis glissant des organes d'emboîtement 13,14 l'un contre l'autre. De telles rampes peuvent être étendues radialement pour conforter la coopération des organes d'accouplement 18,19 tout en permettant, sous l'effet d'un dit effort résistant, d'éloigner axialement les organes d'accouplement 18,19 l'un de l'autre à l'encontre de la poussée exercée par les moyens élastiquement déformables 15 sur l'organe d'accouplement 18,19 mobile.

Ledit seuil d'effort résistant peut être précisément défini selon le tarage de la résistance élastique des moyens élastiquement déformables 15. La conformation avantageuse des organes d'emboîtement 13,14 en coin et goulotte n'est cependant pas exclusive de toute forme procurant un agencement en dièdre de la section des organes d'emboîtement 13,14 ménageant lesdites rampes de glissement des organes d'emboîtement 13,14 l'un contre l'autre.

Le premier organe d'accouplement 18 est agencé en bague 27 autorisant le passage à son travers d'une douille 28 formant le deuxième organe d'accouplement 19. Il est évidemment compris en ce qui concerne le premier organe d'accouplement 18 que dans ce cas le couloir 26 dont il est doté comprend en outre l'évidement intérieur 29 de la bague 27.

Il est par ailleurs illustré sur la fig.8 un exemple de réalisation de dits moyens de fixation 30,31 équipant un organe d'accouplement 18,19 fixe. Selon cet exemple de réalisation, l'organe d'accouplement fixe est constitué par le premier organe d'accouplement 18. Lesdits moyens de fixation 30,31 sont du type par emmanchement de doigts 30 fixés au bras de levier et logés à l'intérieur de logements 31 axiaux radialement répartis sur le premier organe d'accouplement 18.

## Revendications

1. Mécanisme d'accouplement entre un organe de commande (1') générateur de commandes de vol manuelles et un arbre pivotant (10) d'un vérin de « trim » (4) d'une chaîne cinématique de transmission de commandes de vol d'un aéronef, le mécanisme d'accouplement mettant en oeuvre :
-) ledit arbre pivotant (10) monté fixe en translation et entraîné en pivotement autour de son axe (A) général d'extension par un moteur (9),
-) l'organe de commande (1') monté basculant et mécaniquement relié à un bras de levier (3) accouplé avec l'arbre pivotant (10),
-) un mécanisme à limitation de couple (12) comportant des organes d'emboîtement (13,14) coopérants entre eux par emboîtement sous l'effet d'une poussée exercée par des moyens élastiquement déformables (15),
de sorte qu'un effort résistant (C) à une transmission de mouvement entre l'arbre pivotant (10) et l'organe de commande ('1) supérieur à un seuil d'effort prédéfini selon l'effort de poussée exercée par les moyens élastiquement déformables (15) provoque une rupture spontanée de la coopération entre eux des organes d'emboîtement (13,14) et une libération de l'organe de commande (1') vis-à-vis de l'emprise exercée par l'arbre pivotant (10) sur le bras de levier (3),
**caractérisé :**
**en ce que** l'accouplement entre l'arbre pivotant (10) et le bras de levier (3) est réalisée par brochage axial suivant ledit axe (A) par l'intermédiaire de dits organes d'emboîtement (13,14) du mécanisme à limitation de couple (12) respectivement ménagés sur l'un et l'autre d'un couple d'organes d'accouplement (18,19), un premier organe d'accouplement (18) étant lié en rotation avec le bras de levier (3) et un deuxième organe d'accouplement (19) étant lié en rotation avec l'arbre pivotant (10), et
en ce les organes d'accouplement (18,19) comportent chacun des couloirs (26,29) axiaux de circulation à leur travers de l'autre organe d'accouplement (18,19), ladite rupture de la mise en coopération des organes d'emboîtement (13,14) entre eux provoquant un déplacement axial relatif des organes d'accouplement (18,19) l'un à travers l'autre par l'intermédiaire des couloirs (26,29) sous l'effet d'une poussée (P) axiale exercée par lesdits moyens à déformation élastique (15) contre l'un quelconque des organes d'accouplement (18,19), désigné organe d'accouplement mobile.

2. Mécanisme d'accouplement selon la revendication 1,
**caractérisé en ce que** ladite rupture de la coopération entre eux des organes d'emboîtement (13,14) étant provoquée par une mise en décalage radial des organes d'accouplement (18,19) l'un par rapport à l'autre sous l'effet d'un dit effort résistant (C) supérieur au seuil de couple, ledit décalage radial autorise le déplacement axial de l'organe d'accouplement (18,19) mobile à travers l'autre organe d'accouplement (18,19), désigné organe d'accouplement fixe, vers une position escamotée dans laquelle l'organe d'accouplement (18,19) mobile est éjecté par les moyens élastiquement déformables (15) hors de l'organe d'accouplement (18,19) fixe.

3. Mécanisme d'accouplement selon la revendication 2,
**caractérisé en ce qu'**un capot (22) amovible ménage une chambre de réception de l'organe d'accouplement (18,19) mobile en position escamotée, un retrait du capot (22) autorisant un accès par un opérateur à l'organe d'accouplement (18,19) mobile en position escamotée.

4. Mécanisme d'accouplement selon l'une quelconque des revendications 1 à 3,
**caractérisé en ce que** les organes d'emboîtement (18,19) et au moins en partie les couloirs (26) sont ménagés sur des épaulements (16,17) respectifs axialement ajourés équipant respectivement l'un et l'autre des organes d'accouplement (18,19).

5. Mécanisme d'accouplement selon la revendication 4,
**caractérisé en ce que** les épaulements (16,17) dont sont munis les organes d'accouplement (18,19) sont chacun formés d'un jeu d'ailettes (25) radiales ménageant entre elles des passages (26) axiaux des ailettes (25) de l'autre organe d'accouplement (18,19) en formant au moins en partie lesdits couloirs (26,29).

6. Mécanisme d'accouplement selon l'une quelconque des revendications 4 et 5,
**caractérisé :**
**en ce que** le premier organe d'accouplement (18) est agencé en bague (27) munie d'un premier épaulement (16) comportant un premier jeu d'organes d'emboîtement (13) et un premier dit couloir (26,29), et
**en ce que** le deuxième organe d'accouplement (19) mobile est agencé en douille (28) enfilée autour de l'arbre pivotant (10) et munie d'un deuxième épaulement (17) comportant un deuxième jeu d'organes d'emboîtement (14) et un deuxième dit couloir (29).

7. Mécanisme d'accouplement selon l'une quelconque des revendications 1 à 6,
**caractérisé en ce que** les organes d'emboîtement (13,14) sont agencés respectivement en coin et en goulotte de formes complémentaires à sections conformées en dièdre ménageant des rampes de glissement des organes d'emboîtement (13,14) l'un contre l'autre sous l'effet dudit effort résistant (C) à l'encontre de la poussée (P) axiale exercée par les moyens à déformation élastique (15) contre l'organe d'accouplement (18,19) mobile.

8. Mécanisme d'accouplement selon l'une quelconque des revendications 1 à 7,
**caractérisé en ce que** les moyens élastiquement déformables (15) comprennent un jeu de rondelles (23) conformées en assiette axialement empilées tête bêche et un ressort hélicoïdal (24).

9. Mécanisme d'accouplement selon l'une quelconque des revendications 1 à 8,
**caractérisé en ce que** le bras de levier (3) comporte un fût (20) ménageant une cage logeant au moins un tronçon de l'arbre pivotant (10) en prise avec le deuxième organe d'accouplement (19), logeant les moyens à déformation élastique (15) et logeant les organes d'accouplement (18,19) au moins en position de brochage.

10. Mécanisme d'accouplement selon l'une quelconque des revendications 1 à 9,
**caractérisé en ce que** l'organe d'accouplement (18,19) mobile est guidé en mobilité axiale par des moyens de guidage (21) en translation équipant l'un des organes parmi l'un quelconque du bras de levier (3) et de l'arbre pivotant (10) avec lequel l'organe d'accouplement (18,19) mobile est lié en rotation.

11. Mécanisme d'accouplement selon la revendication 10,
**caractérisé en ce que** les moyens de guidage (21) en translation sont du type par clavetage procurant la liaison en rotation de l'organe d'accouplement (18,19) mobile avec ledit organe parmi l'un quelconque du bras de levier (3) et de l'arbre pivotant (10) avec lequel l'organe d'accouplement (18,19) mobile est lié en rotation.

12. Mécanisme d'accouplement selon l'une quelconque des revendications 1 à 11,
**caractérisé en ce que** l'organe d'accouplement (18,19) fixe est relié solidairement par des moyens de fixation (30,31) à l'un des organes parmi l'un quelconque du bras de levier (3) et de l'arbre pivotant (10) avec lequel l'organe d'accouplement (18,19) fixe est lié en rotation.

13. Mécanisme d'accouplement selon l'une quelconque des revendications 1 à 12,
**caractérisé en ce que** l'organe d'accouplement mobile est formé par le premier organe d'accouplement (18) et **en ce que** l'organe d'accouplement fixe est formé par le deuxième organe d'accouplement (19).

14. Mécanisme d'accouplement selon l'une quelconque des revendications 1 à 13,
**caractérisé en ce que** l'organe d'accouplement mobile est formé par le deuxième organe d'accouplement (19) et **en ce que** l'organe d'accouplement fixe est formé par le premier organe d'accouplement (18).

15. Vérin de « trim » (4) pour aéronef agencé pour équiper une chaîne de transmission mécanique (2) de commandes de vol provoquant une manoeuvre d'un organe mobile (1) modifiant l'attitude en vol d'un aéronef, le vérin de « trim » (4) comprenant un arbre pivotant (10) entraîné en pivotement par un moteur (9) et accouplé à un bras de levier (3) muni de moyens de liaison mécanique (12') dédiés à la mise en prise mécanique entre le vérin de « trim » (4) et un organe de commande (1') générant des commandes de vol manuelles que comprend ladite chaîne de transmission mécanique (2) de commandes de vol, **caractérisé en ce que** le vérin de « trim » (4) comprend un mécanisme d'accouplement selon l'une quelconque des revendications 1 à 14, et **en ce que** le vérin de « trim » (4) intègre un mécanisme à limitation de couple (12) du mécanisme d'accouplement, par brochage axial entre le bras de levier (3) et l'arbre pivotant (10) .

## Patentansprüche

1. Kupplungsmechanismus zwischen einem Organ (1'), welches manuelle Flugsteuerbefehle erzeugt, und einer drehbaren Welle (10) eines Trimmaktuators (4) eines Übertragungsstrangs für Flugsteuerbefehle eines Luftfahrzeugs, wobei der Kupplungsmechanismus einsetzt:
-) die drehbare Welle (10), die bezüglich einer Translationsbewegung fest montiert ist und durch einen Motor (9) um ihre allgemeine Erstreckungsachse (A) drehangetrieben wird,
-) das Steuerorgan (1'), welches schwenkbar montiert ist und mechanisch mit einem Hebelarm (3) verbunden ist, der an die drehbare Welle (10) gekoppelt ist,
-) einem Drehmomentbegrenzungsmechanismus (12), mit Verrastungsorganen (13, 14), die durch gegenseitiges Verrasten miteinander unter der Einwirkung eines Schubs zusammenwirken, der durch elastisch verformbare Mittel (15) ausgeübt wird,
derart, dass eine Kraft (C), die sich einer Übertragung der Bewegung zwischen der drehbaren Welle (10) und dem Steuerorgan (1') widersetzt, die größer ist als ein gemäß der Schubkraft, die durch die elastisch verformbaren Mittel (15) ausgeübt wird, vordefinierter Kraftschwellenwert, einen spontanen Abbruch des Zusammenwirkens zwischen den Verrastorganen (13, 14) und eine Freisetzung des Steuerorgans (1') gegenüber dem Eingriff, der durch die drehbare Welle (10) auf den Hebelarm (3) ausgeübt wird, bewirkt,
**dadurch gekennzeichnet,**
**dass** die Kopplung zwischen der drehbaren Welle (10) und dem Hebelarm (3) erzielt wird durch axiales Zusammenstecken entlang der Achse (A) über die Verrastungsorgane (13, 14) des Mechanismus zur Drehmomentbegrenzung (12), die jeweils angeordnet sind auf dem einen und dem anderen eines Paars von Kupplungsorganen (18, 19), wobei ein erstes Kupplungsorgan (18) drehfest mit dem Hebelarm (3) verbunden ist und ein zweites Kupplungsorgan (19) drehfest mit der drehbaren Welle (10) verbunden ist, und dadurch, dass die Kupplungsorgane (18, 19) jeweils axiale Durchgänge (26, 29) für das andere Kupplungsorgan (18, 19) durch sie hindurch aufweisen, wobei der Abbruch des Zusammenwirkens der Verrastungsorgane (13, 14) miteinander eine axiale Relativbewegung der Kupplungsorgane (18,19) durch einander hindurch über die Bahnen (26, 29) unter der Einwirkung eines axialen Schubs (P), der von den elastisch verformbaren Mitteln (15) gegen ein beliebiges der Kupplungsorgane (18), genannt bewegliches Kupplungsorgan, ausgeübt wird, auslöst.

2. Kupplungsmechanismus nach Anspruch 1,
**dadurch gekennzeichnet, dass** der Abbruch des Zusammenwirkens zwischen den Verrastungsorganen (13, 14) hervorgerufen wird durch ein radiales Versetzen der Kupplungsorgane (18, 19) zueinander unter der Einwirkung einer Widerstandskraft (C), die größer als ein Drehmomentschwellenwert ist, wobei die radiale Versetzung die axiale Bewegung des beweglichen Kupplungsorgans (18, 19) durch das andere Kupplungsorgan (18, 19), genannt festes Kupplungsorgan, in eine eingezogene Stellung erlaubt, in der das bewegliche Kupplungsorgan (18, 19) durch die elastisch verformbaren Mittel (15) aus dem festen Kupplungsorgan (18, 19) ausgestoßen wird.

3. Kupplungsmechanismus nach Anspruch 2,
**dadurch gekennzeichnet, dass** eine abnehmbare Kappe (22) eine Ausnahmekammer für das bewegliche Kupplungsorgan (18, 19) in eingezogener Stellung bildet, wobei ein Entfernen der Kappe (22) einen Zugang durch eine Bedienungsperson zum beweglichen Kupplungsorgan (18, 19) in eingezogener Stellung erlaubt.

4. Kupplungsmechanismus nach einem der Ansprüche 1 bis 3,
**dadurch gekennzeichnet, dass** die Verrastungsorgane (18, 19) und mindestens ein Teil der Gänge (26) auf jeweiligen Schultern (16, 17), die axial durchbrochen sind, mit denen jeweils das eine und das andere der Kupplungsorgane (18,19) ausgerüstet sind, angeordnet sind.

5. Kupplungsmechanismus nach Anspruch 4,
**dadurch gekennzeichnet, dass** die Schultern (16, 17), mit denen die Kupplungsorgane (18, 19) ausgerüstet sind jeweils aus einem Satz radialer Flügel (25) gebildet werden, die zwischen sich axiale Durchgänge (26) für Flügel (25) des anderen Kupplungsorgans (18, 19) ausbilden, indem sie mindestens teilweise die Gänge (26, 29) bilden.

6. Kupplungsmechanismus nach einem der Ansprüche 4 und 5,
**dadurch gekennzeichnet, dass** das erste Kupplungsorgan (18) als Ring (27) geformt ist, der mit einer ersten Schulter (16) versehen ist, der einen ersten Satz Verrastungsorgane (13) und einen ersten Gang (26, 29) aufweist, und
dadurch, dass das zweite bewegliche Kupplungsorgan (19) als Hülse (28) ausgeführt ist, die um die drehbare Welle (10) aufgezogen ist und mit einer zweiten Schulter (17) versehen ist, die einen zweiten Satz Verrastungsorgane (14) und einen zweiten Gang (29) aufweist.

7. Kupplungsmechanismus nach einem der Ansprüche 1 bis 6,
**dadurch gekennzeichnet, dass** die Verrastungsorgane (13, 14) jeweils als Keil und als Rinne mit komplementären Formen mit diederförmigen Querschnitten geformt sind, die Rampen für das Gleiten von Verrastungsorganen (13, 14) aufeinander unter der Einwirkung der Widerstandskraft (C) gegen den axialen Schub (B), der von den elastisch verformbaren Mitteln (15) gegen das bewegliche Kupplungsorgan (18, 19) ausgeübt wird, bilden.

8. Kupplungsmechanismus nach einem der Ansprüche 1 bis 7,
**dadurch gekennzeichnet, dass** die elastisch verformbaren Mittel (15) einen Satz runder Scheiben (23) aufweisen, die tellerförmig geformt sind und axial entgegengesetzt gelegt gestapelt sind und eine Spiralfeder (24) aufweisen.

9. Kupplungsmechanismus nach einem der Ansprüche 1 bis 8,
**dadurch gekennzeichnet, dass** der Hebelarm (3) eine Hülse (20) aufweist, die ein Gehäuse bildet, in dem mindestens ein Abschnitt der drehbaren Welle (10) in Eingriff mit dem zweiten Kupplungsorgan (19) gelagert ist, in dem die elastisch verformbaren Mittel (15) gelagert sind und die Kupplungsorgane (18,19) mindestens in Einsteckstellung gelagert sind.

10. Kupplungsmechanismus nach einem der Ansprüche 1 bis 9,
**dadurch gekennzeichnet, dass** das bewegliche Kupplungsorgan (18, 19) in seiner axialen Beweglichkeit von Translationsführungsmitteln (21) geführt wird, mit denen eines der Organe ausgerüstet ist, unter denen sich der Hebelarm (3) und die drehbare Welle (10) befinden, mit dem bzw. der das bewegliche Kupplungsorgan (18,19) drehfest verbunden ist.

11. Kupplungsmechanismus nach Anspruch 10,
**dadurch gekennzeichnet, dass** die Translationsführungsmittel (21) vom Typ einer Keilverbindung sind, die die drehfeste Verbindung des beweglichen Kupplungsorgans (18, 19) mit dem Organ, nämlich dem Hebelarm (3) oder der drehbaren Welle (10), mit dem bzw. der das bewegliche Kupplungsorgan (18,19) drehfest verbunden ist, herstellt.

12. Kupplungsmechanismus nach einem der Ansprüche 1 bis 11,
**dadurch gekennzeichnet, dass** das feste Kupplungsorgan (18, 19) durch Befestigungsmittel (30, 31) mit einem der Organe, nämlich dem Hebelarm (3) oder der drehbaren Welle (10), mit dem bzw. der das feste Kupplungsorgan (18, 19) drehfest verbunden ist, fest verbunden ist.

13. Kupplungsmechanismus nach einem der Ansprüche 1 bis 12,
**dadurch gekennzeichnet, dass** das bewegliche Kupplungsorgan von dem ersten Kupplungsorgan (18) gebildet wird, und dadurch, dass das feste Kupplungsorgan von dem zweiten Kupplungsorgan (19) gebildet wird.

14. Kupplungsmechanismus nach einem der Ansprüche 1 bis 13,
**dadurch gekennzeichnet, dass** das bewegliche Kupplungsorgan von dem zweiten Kupplungsorgan (19) gebildet wird, und dadurch, dass das feste Kupplungsorgan von dem ersten Kupplungsorgan (18) gebildet wird.

15. Trimmaktuator (4) für ein Luftfahrzeug, mit dem ein mechanischer Flugsteuerungsbefehlsübertragungsstrang (2) ausgerüstet ist, der eine Betätigung eines beweglichen Organs (1) bewirkt, die das Flugverhalten eines Luftfahrzeugs verändert, wobei der Trimmaktuator (4) eine drehbare Welle (10) aufweist, die von einem Motor (9) zu einer Schwenkbewegung angetrieben wird und die an einen Hebelarm (3) gekoppelt ist, der mit mechanischen Verbindungsmitteln (12') versehen ist, die für den mechanischen Eingriff zwischen dem Trimmaktuator (4) und einem Steuerorgan (1') bestimmt sind, welches manuelle Flugbefehle erzeugt und den mechanischen Flugbefehlsübertragungsstrang (2) umfasst,
**dadurch gekennzeichnet, dass** der Trimmaktuator (4) einen Kupplungsmechanismus nach einem der Ansprüche 1 bis 14 aufweist, und dadurch, dass der Trimmaktuator (4) einen Mechanismus (12) zur Begrenzung des Drehmoments des Kupplungsmechanismus durch axiales Ineinanderstecken des Hebelarms (3) und der drehbaren Welle (10) umfasst.

## Claims

1. A coupling mechanism between a control member (1') which generates manual flight commands and a pivoting shaft (10) of a trim actuator (4) of a kinematic transmission chain for transmitting flight commands of an aircraft, the coupling mechanism putting into action:
- ) said pivoting shaft (10) which is mounted so to be fixed in translation and driven in pivoting about its general axis of extension (A) by a motor (9),
- ) the control member (1') which is mounted to tilt and is mechanically connected to a lever arm (3) coupled to the pivoting shaft (10),
-) a torque limitation mechanism (12) comprising interlocking members (13, 14) which cooperate with each other by interlocking under the effect of thrust exerted by elastically deformable means (15),
so that a resisting force (C) resisting transmission of movement between the pivoting shaft (10) and the control member (1') which is greater than a force threshold predefined according to the thrust force exerted by the elastically deformable means (15) brings about spontaneous interruption of the cooperation with each other between the interlocking members (13, 14) and release of the control member (1') from the hold exerted by the pivoting shaft (10) on the lever arm (3),
**characterised:**
**in that** the coupling between the pivoting shaft (10) and the lever arm (3) is carried out by axial engagement along said axis (A) by means of said interlocking members (13, 14) of the torque limitation mechanism (12) which are formed respectively on one and the other of a pair of coupling members (18, 19), a first coupling member (18) being connected in rotation to the lever arm (3) and a second coupling member (19) being connected in rotation to the pivoting shaft (10), and
**in that** the coupling members (18, 19) each comprise axial passages (26, 29) for the other coupling member (18, 19) to pass therethrough, said interruption of the cooperation of the interlocking members (13, 14) with each other bringing about a relative axial displacement of the coupling members (18, 19) one through the other by means of the passages (26, 29) under the effect of an axial thrust (P) exerted by said elastic deformation means (15) against any one of the coupling members (18, 19), referred to as "mobile coupling member".

2. A coupling mechanism according to Claim 1,
**characterised in that**, said interruption of the cooperation with each other of the interlocking members (13, 14) being caused by radial offsetting of the coupling members (18, 19) one relative to the other under the effect of a said resisting force (C) greater than the torque threshold, said radial offsetting permits the axial displacement of the mobile coupling member (18, 19) through the other coupling member (18, 19), referred to as "fixed coupling member", towards a retracted position in which the mobile coupling member (18, 19) is ejected out of the fixed coupling member (18, 19) by the elastically deformable means (15).

3. A coupling mechanism according to Claim 2,
**characterised in that** a removable cover (22) forms a chamber for receiving the mobile coupling member (18, 19) in the retracted position, removal of the cover (22) allowing access by an operator to the mobile coupling member (18, 19) in the retracted position.

4. A coupling mechanism according to any one of Claims 1 to 3,
**characterised in that** the interlocking members (18, 19) and at least in part the passages (26) are formed on respective axially open shoulders (16, 17) fitted on the one and the other of the coupling members (18, 19), respectively.

5. A coupling mechanism according to Claim 4,
**characterised in that** the shoulders (16, 17) with which the coupling members (18, 19) are provided are each formed of a set of radial fins (25) forming between them axial passages (26) for the fins (25) of the other coupling member (18, 19), forming at least in part said passages (26, 29).

6. A coupling mechanism according to any one of Claims 4 and 5,
**characterised:**
**in that** the first coupling member (18) is arranged as a ring (27) provided with a first shoulder (16) comprising a first set of interlocking members (13) and a first said passage (26, 29), and
**in that** the second mobile coupling member (19) is arranged as a bush (28) placed around the pivoting shaft (10) and provided with a second shoulder (17) comprising a second set of interlocking members (14) and a second said passage (29).

7. A coupling mechanism according to any one of Claims 1 to 6,
**characterised in that** the interlocking members (13, 14) are arranged respectively as wedges and as troughs of complementary shapes with dihedrally-shaped sections forming ramps for the interlocking members (13, 14) to slide one against another under the effect of said resisting force (C) counter to the axial thrust (P) exerted by the elastic deformation means (15) against the mobile coupling member (18, 19).

8. A coupling mechanism according to any one of Claims 1 to 7,
**characterised in that** the elastically deformable means (15) comprise a set of dish-shaped washers (23) axially stacked head-to-tail and a helical spring (24).

9. A coupling mechanism according to any one of Claims 1 to 8,
**characterised in that** the lever arm (3) comprises a barrel (20) forming a cage accommodating at least a portion of the pivoting shaft (10) engaged with the second coupling member (19), accommodating the elastic deformation means (15) and accommodating the coupling members (18, 19) at least in the engagement position.

10. A coupling mechanism according to any one of Claims 1 to 9,
**characterised in that** the mobile coupling member (18, 19) is guided in axial movement by guide means (21) for guiding in translation which are fitted on one of the members among any one of the lever arm (3) and the pivoting shaft (10) with which the mobile coupling member (18, 19) is connected in rotation.

11. A coupling mechanism according to Claim 10,
**characterised in that** the guide means (21) for guiding in translation are of the keying type providing the connection in rotation of the mobile coupling member (18, 19) with said member among any one of the lever arm (3) and the pivoting shaft (10) with which the mobile coupling member (18, 19) is connected in rotation.

12. A coupling mechanism according to any one of Claims 1 to 11,
**characterised in that** the fixed coupling member (18, 19) is connected integrally by fastening means (30, 31) to one of the members among any one of the lever arm (3) and the pivoting shaft (10) with which the fixed coupling member (18, 19) is connected in rotation.

13. A coupling mechanism according to any one of Claims 1 to 12,
**characterised in that** the mobile coupling member is formed by the first coupling member (18) and **in that** the fixed coupling member is formed by the second coupling member (19).

14. A coupling mechanism according to any one of Claims 1 to 13,
**characterised in that** the mobile coupling member is formed by the second coupling member (19) and **in that** the fixed coupling member is formed by the first coupling member (18).

15. A trim actuator (4) for an aircraft, arranged to be fitted to a mechanical transmission chain (2) for transmitting flight commands bringing about movement of a mobile member (1) which modifies the attitude during flight of an aircraft, the trim actuator (4) comprising a pivoting shaft (10) driven in pivoting by a motor (9) and coupled to a lever arm (3) provided with mechanical connecting means (12') dedicated to the mechanical engagement between the trim actuator (4) and a control member (1') generating manual flight commands which said mechanical transmission chain (2) for transmitting flight commands comprises, **characterised in that** the trim actuator (4) comprises a coupling mechanism according to any one of Claims 1 to 14, and **in that** the trim actuator (4) incorporates a torque limitation mechanism (12) of the coupling mechanism, by axial engagement between the lever arm (3) and the pivoting shaft (10).
